# EUROPÄISCHE PATENTSCHRIFT

(11) **EP 3 342 883 B1**
(45) Veröffentlichungstag und Bekanntmachung des Hinweises auf die Patenterteilung: **03.07.2019**
(21) Anmeldenummer: 18157398.1
(22) Anmeldetag: 10.04.2015
(51) Int. Cl.: C21D 1/673, C21D 8/02, C21D 8/04, C21D 9/46, C22C 21/06, C22F 1/047

(54) **VERFAHREN ZUR HERSTELLUNG EINES KRAFTFAHRZEUGBAUTEILS AUS ALUMINIUM**
METHOD FOR MANUFACTURING A MOTOR VEHICLE PART MADE OF ALUMINIUM
PROCÉDÉ DE FABRICATION D'UN ÉLÉMENT DE VÉHICULE AUTOMOBILE EN ALUMINIUM

(30) Priorität: 10.06.2014 DE 102014108113
(43) Veröffentlichungstag der Anmeldung: 04.07.2018
(62) Teilanmeldung aus: 15163157.9
(73) Patentinhaber: Benteler Automobiltechnik GmbH, 33102 Paderborn (DE)
(72) Erfinder: Bohner, Friedrich, 33813 Oerlinghausen (DE); Dörr, Jochen, 33104 Bad Driburg (DE); Grewe, Jochem, 33154 Salzkotten (DE); Hielscher, Christian, 33129 Delbrück (DE); Tölle, Jörn, 33102 Paderborn (DE); Rauscher, Boris, 33100 Paderborn (DE)
(74) Vertreter: Osterhoff, Utz

(56) Entgegenhaltungen:
- EP-A1- 2 415 882
- DE-A1-102013 013 359
- KATHLEEN SIEFERT ET AL: "Enhancement Of Forming Limits Of Aluminum Alloys Using An Intermediate Heat Treatment", AIP CONFERENCE PROCEEDINGS, 27. Oktober 2010 (2010-10-27), Seiten 359-364, XP055207912, ISSN: 0094-243X, DOI: 10.1063/1.3552469

## Beschreibung

Die vorliegende Erfindung betrifft ein Verfahren zur Herstellung eines Kraftfahrzeugbauteils gemäß den Merkmalen im Oberbegriff von Patentanspruch 1.

Aus dem Stand der Technik ist es bekannt, Fahrzeugbauteile sowie Kraftfahrzeugstrukturbauteile aus metallischen Werkstoffen herzustellen. Hierbei wird einer selbsttragenden Kraftfahrzeugkarosserie die notwendige Steifigkeit für den regulären Fahrzeugbetrieb gegeben. In den letzten Jahren sind die Anforderungen an solche Kraftfahrzeugkarosserien jedoch stark gestiegen. Es stand nicht mehr nur die reine Formgebung im Vordergrund, sondern gleichzeitig auch die gezielte Einstellung von Eigenschaften im Falle eines Fahrzeugcrashes sowie konsequenter Leichtbau.

Hierzu ist es aus dem Stand der Technik bekannt, Stahlwerkstoffe einzusetzen, mit denen es möglich ist, Bauteile mit hochfesten oder gar höchstfesten Eigenschaften bereitzustellen. Diese hochfesten oder höchstfesten Eigenschaften werden gezielt partiell an den Bauteilen hergestellt.

Alternativ ist es bekannt, Kraftfahrzeugbauteile aus Aluminium herzustellen. Aluminium kommt hierbei als Leichtmetallbauteil zum Einsatz und ermöglicht durch sein geringes spezifisches Eigengewicht eine entsprechende Gewichtsersparnis. Die Herstellung des Aluminiumbauteils für Kraftfahrzeuge ist beispielsweise aus der DE 10 2009 008 282 A1 bekannt.

Aus der EP 2 415 882 A1 ist ein Verfahren zur Herstellung eines Blechumformteils aus einer nicht aushärtbaren Aluminiumlegierung bekannt.

Weiter sind Verfahren für eine zwischen zwei Kaltumformprozessen eingebettete Wärmebehandlung bekannt (Kathleen Siefert et al. "Enhancement Of Forming Limits Of Aluminum Alloys Using An Intermediate Heat Treatment", AIP Conference Proceedings 1315, 359 - 364, 2011).

Aufgabe der vorliegenden Erfindung ist es, ausgehend vom Stand der Technik ein Verfahren zur Herstellung eines Kraftfahrzeugbauteils aus einer Leichtmetalllegierung aufzuzeigen, mit dem es verfahrensökonomisch und kostengünstig möglich ist, ein Kraftfahrzeugbauteil mit voneinander verschiedenen Festigkeitsbereichen zu produzieren.

Die zuvor genannte Aufgabe wird erfindungsgemäß mit einem Herstellungsverfahren gemäß den Merkmalen im Patentanspruch 1 gelöst.

Vorteilhafte Ausführungsvarianten des Verfahrens werden in den abhängigen Patentansprüchen beschrieben.

Eine Ausgestaltungsvariante des erfindungsgemäßen Verfahrens sieht vor, dass in den Temperiervorgang direkt die Umformoperation integriert wird. Hierzu sieht ein Verfahren folgende Verfahrensschritte vor:
- Bereitstellen einer kaltverfestigten Platine aus einer 5000er Aluminiumlegierung,
- Partielles Erwärmen der Platine in mindestens einem ersten Bereich auf eine Temperatur größer 350°C, insbesondere größer 400°C und in mindestens einem zweiten Bereich auf eine Temperatur zwischen 150°C und 350°C, bevorzugt auf 300°C in weniger als 20 s, bevorzugt weniger als 10 s und insbesondere in 2 bis 5 s,
- Transfer in ein Umformwerkzeug, wobei während, und/oder nach der Umformung die Abkühlung auf 5°C bis 40°C, insbesondere auf Raumtemperatur, durchgeführt wird,
- Einstellen einer Dehngrenze an dem Kraftfahrzeugbauteil in dem ersten Bereich kleiner 250 MPa und größer 120 MPa und in dem zweiten Bereich kleiner gleich 450 MPa und größer 200 MPa, wobei die Dehngrenze des zweiten Bereichs kleiner als die Ausgangsdehngrenze der Platine und zugleich zumindest mehr als 50 MPa, bevorzugt mehr als 100 MPa größer als die Dehngrenze in dem ersten Bereich ist.

Mit dem erfindungsgemäßen Verfahren ist es somit möglich eine kaltverfestigte 5000er Aluminiumplatine zu erwärmen, mit einer Transferzeit von besonders bevorzugt weniger als 5 s in ein Kühlwerkzeug einzulegen und in dem Kühlwerkzeug wiederum die partiell unterschiedlich erwärmte Platine in besonders kurzer Zeit zu kühlen. Der gesamte Prozess wird bevorzugt in weniger als 50 s, besonders bevorzugt weniger als 40 s und insbesondere weniger als 30 s durchgeführt. Es handelt sich bei der Dehngrenze um die Dehngrenze RP 0,2.

Die zunächst bereitgestellte kaltverfestigte Platine wird als naturharte Platine oder kaltverfestigte Platine bereitgestellt. In dieser liegt eine Versetzungsdichte im Kristallgitter vor, die eine Ausgangsfestigkeit bzw. Ausgangsdehngrenze zwischen 400 MPa und 500 MPa innehat. Durch die thermische Behandlung, insbesondere die voneinander verschiedene thermische Behandlung wird die Versetzungsdichte im Kristallgitter reduziert, wodurch sich wiederum die Dehngrenze der ursprünglich bereitgestellten Platine reduziert und aufgrund der partiell voneinander verschiedenen Temperatureinwirkung auch partiell voneinander verschiedene Dehngrenzen eingestellt werden. Insbesondere wird eine weichere bzw. duktilere Werkstoffeigenschaft und eine geringere Dehngrenze in einem Anbindungsbereich des Kraftfahrzeugbauteils bereitgestellt, so dass hier ein Abbrechen oder Ausreißen im Crashfall vermieden wird. Diese Eigenschaften ergeben sich auch mit den nachfolgend beschriebenen Verfahrensvarianten bzw. lassen sich mit diesen gezielt einstellen.

Bei dem Umformwerkzeug handelt es sich in diesem Fall um ein kombiniertes Umform- und Kühlwerkzeug. Die Abkühlung kann bereits während des Umformverfahrens zumindest beginnen, so dass bei erstem Kontakt der Platine mit dem Umformwerkzeug, welches insbesondere als Pressenwerkzeug ausgebildet ist, bereits eine geringfügige Abkühlung stattfindet und dann nach vollständigem Schließen des Umformwerkzeuges die endgültige Abkühlung durchgeführt wird. Insbesondere wird die Abkühlung dabei bei diesem genannten Verfahren aber auch bei allen anderen genannten Verfahrensvarianten dieser Offenbarung derart homogen ausgeführt, dass die gesamte Platine bzw. das umgeformte Bauteil vollständig abgekühlt wird. Das heißt die unterschiedlich temperierten Bereiche werden gleichsam abgekühlt auf eine gewünschte Zieltemperatur, welche bevorzugt bei Raumtemperatur liegt. Alternativ wird die Abkühlung in dem kombinierten Umform- und Kühlwerkzeug derart durchgeführt, dass zunächst die auf voneinander verschiedene Temperaturbereiche temperierte Platine umgeformt wird abgeschlossen. Eventuell durch den Kontakt mit dem Umformwerkzeug vorher einsetzende Kühlungen sind dabei im Rahmen der Erfindung zu vernachlässigen.

Eine weitere Ausführungsvariante des erfindungsgemäßen Verfahrens sieht folgende Verfahrensschritte vor:
- Bereitstellen einer kaltverfestigten Platine aus einer 5000er Aluminiumlegierung,
- Partielles Erwärmen der Platine in mindestens einem ersten Bereich auf eine Temperatur größer 350°C, insbesondere größer 400°C und mindestens in einem zweiten Bereich auf eine Temperatur zwischen 150°C und 350°C, bevorzugt auf 300°C in weniger als 20s, bevorzugt weniger als 10 s und insbesondere in 2 bis 5 s,
- Transfer in ein Umformwerkzeug, wobei in dem Umformwerkzeug die Umformung in weniger als 20 s bevorzugt weniger als 10 s und insbesondere in 2 bis 5 s, durchgeführt wird,
- Transfer in Kühlwerkzeug und Abkühlen in weniger als 20 s, bevorzugt weniger als 10 s und insbesondere in 2 bis 5 s auf 5°C bis 40°C, insbesondere auf Raumtemperatur,
- Einstellen einer Dehngrenze in dem ersten Bereich kleiner 250 MPa und größer 120 MPa und in dem zweiten Bereich kleiner gleich 450 MPa und größer 200 MPa, wobei die Dehngrenze des zweiten Bereichs kleiner als die Ausgangsdehngrenze der Platine und zugleich zumindest mehr als 50 MPa, bevorzugt mehr als 100 MPa größer als die Dehngrenze in dem ersten Bereich ist.

In dieser Verfahrensvariante wird insbesondere eine derartige Schnellumformung durchgeführt, so dass die Umformung selbst in weniger als 20 s stattfindet. Insbesondere ergibt sich herbei wiederum der Vorteil, dass das Umformwerkzeug nach Abschluss des Umformvorganges nicht geschlossen gehalten werden muss, so dass ein vollständiges Abkühlen herbeigeführt würde, sondern direkt wiederum geöffnet werden kann, wobei dann die eigentliche Abkühlung in einem nachgelagerten separaten Kühlwerkzeug erfolgt. Insbesondere ergibt sich bei dieser Ausgestaltungsvariante eine besonders schnelle Taktzeit des erfindungsgemäßen Verfahrens.

Im Rahmen der Erfindung wird bevorzugt eine Aluminiumlegierung mit der Bezeichnung AW/AA5xxx-Hxx verwendet. Es handelt sich dabei bevorzugt um eine kaltverfestigte Aluminiumlegierung, welche insbesondere durch einen vorgeschalteten Walzprozess entsprechend kaltverfestigt ist und optional in Zwischenschritten oder im Nachgang thermisch nachbehandelt worden sein kann. Dabei handelt es sich insbesondere um ein dem erfindungsgemäßen Erwärmen vorgeschaltetes Kaltwalzen. Durch das Kaltwalzen werden Versetzungen im Kristallgitter ausgebildet, so dass die kaltverfestigte Aluminiumlegierung eine Ausgangsdehngrenze zwischen 200 MPa und 500 MPa aufweist, insbesondere 300 MPa bis 450 MPa. Der Festigkeitszustand ist an dem verfestigten Ausgangsmaterial oder aber auch an einem hieraus hergestellten Kraftfahrzeugbauteil durch einen Zugversuch nachweisbar. Insbesondere wird eine Aluminiumlegierung gemäß der europäischen Norm EN515:1993 im Werkstoffzustand H12, H14, H16, H18, H19, H22, H24, H26, H28, H32, H34, H36 oder H38 verarbeitet, welche als Legierungselemente neben Aluminium zumindest Magnesium und gegebenenfalls Mangan sowie weitere Legierungselemente aufweist.

Insbesondere werden mit allen Verfahrensvarianten in einem ersten Bereich Festigkeiten zwischen 250 MPa und 120 MPa eingestellt und in dem zweiten Bereich Festigkeiten zwischen 450 MPa und 200 MPa eingestellt. Mithin wird ein eher harter Bereich sowie ein diesem gegenüber weicheren bzw. duktilerer Bereich an der Platine und dann mittelbar an dem nachgelagert hergestellten Kraftfahrzeugbauteil oder bei direkter Herstellung des Kraftfahrzeugbauteils an diesem direkt eingestellt.

Weiterhin besonders bevorzugt wird die Platine vor, oder das Kraftfahrzeugbauteil während oder nach der Umformung beschnitten, insbesondere endbeschnitten. Hiermit ist es dann möglich die äußere Bauteilkontur festzulegen.

In einer besonders bevorzugten Ausführungsvariante wird eine Platine mit mindestens zwei voneinander verschiedenen Wandstärken umgeformt. Insbesondere kommt hier ein Tailored Material zum Einsatz, wobei die verschiedenen Wandstärken insbesondere durch ein partielles Abwalzen während des Kaltwalzens hergestellt sind. Dies ist als Tailor Rolled Blank bekannt. Im Rahmen der Erfindung ist es jedoch auch möglich, ein Tailor Welded Blank zu verwenden, mithin eine Platine bei der zwei Blechplatinenteile mit unterschiedlicher Wandstärke thermisch gefügt sind. Hierzu eignet sich insbesondere das Reibrührschweißen, aber auch andere stoffschlüssige Kopplungsverfahren können zum Einsatz kommen. Im Rahmen der Erfindung ist es jedoch auch möglich, eine gepatchte Platine zu verwenden, so dass ein Bauteilpatch auf die Platine lokal aufgebracht wird. Die Platine wird dann zusammen mit dem Bauteilpatch umgeformt. Das Bauteilpatch wird dabei insbesondere mit der Platine verklebt sowie durch mechanische oder thermische Verfahren, wie z.B. Clinchen, Nieten, Reibrührschweißen, Punktschweißen in Position fixiert, wobei der Kleber thermisch aktivierbar ist und bei Erwärmen der Platine auf Umformtemperatur entsprechend mit der Platine zusammen verklebt wird.

Bezüglich der Einstellung der Dehngrenze im fertigen Kraftfahrzeugbauteil beziehen sich die Werte jeweils auf die Grundplatine, das heißt, auf die größere der Platinen, auf die wenigstens eine Patchplatine aufgebracht wurde.

Als Werkstoff für die Patchplatine kann dieselbe Aluminiumlegierung wie für die Grundplatine Verwendung finden. In diesem Fall ist der Ausgangslieferzustand oder die Wärmebehandlung der Patchplatine so zu wählen, dass während der Umformung zumindest das Formänderungsvermögen des korrespondierenden Bereiches der Grundplatine erreicht wird. Das gleiche gilt aber auch bei Einsatz eines anderen Patchwerkstoffes.

Besonders bevorzugt wird bei dem Tailored Material eine Platine mit Dickenvariationen zwischen 1 mm und 10 mm, insbesondere von 2 mm bis 6 mm Wandstärke umgeformt. Die Platine kann dann zumindest partiell dickere Wandstärken aufweisen, wobei die dickeren Wandstärken zwischen 2 mm und 15 mm, insbesondere zwischen 3 mm und 12 mm und ganz besonders bevorzugt zwischen 3,5 mm und 10 mm aufweisen und insbesondere bis zu 3 mm dicker sind als die übrigen Bereiche der Platine.

Insbesondere wird mit dem erfindungsgemäßen Verfahren ein Kraftfahrzeugbauteil aus einer Aluminiumlegierung hergestellt, welches im Fall einer Kollision lokal eine, in dessen Auslegung vorausdefinierte Deformation erfahren soll, wobei das Kraftfahrzeugbauteil in Beschnittbereichen und/oder Koppelabschnitten duktiler und weicher eingestellt werden kann.

Weiterhin kann das Kraftfahrzeugbauteil in einer weiteren Verfahrensvariante mit weiteren Verstärkungsteilen gefügt werden, so dass eine Kraftfahrzeugsäule entsteht. Auch die Verstärkungsteile können nach dem erfindungsgemäßen Verfahren hergestellt werden. Die Verstärkungsteile selbst werden bevorzugt nach Abschluss des Umformverfahrens mit dem Kraftfahrzeugbauteil gefügt. Insbesondere handelt es sich dabei um eine Innenverstärkung und/oder eine Außenverstärkung. Die Innenverstärkung kann beispielsweise in Form eines Patches auf das hergestellte Kraftfahrzeugbauteil aufgebracht werden. Im Rahmen der Erfindung ist es jedoch auch möglich, durch die Koppelung mit der Innenverstärkung und/oder der Außenverstärkung ein entsprechendes Hohlbauteil herzustellen. Bei den Verstärkungen handelt es sich insbesondere auch um Aluminiumbauteile. Die Verstärkung kann jedoch auch als Stahlbauteil ausgebildet sein oder aus Faserverbundwerkstoff aufgebracht sein. Besonders bevorzugt wird die Verstärkung mit dem Kraftfahrzeugbauteil verklebt. Das Kleben wird insbesondere mit einem thermischen oder mechanischen Fügeverfahren kombiniert, um die Verstärkung beim Aushärten in Position zu halten. Im Rahmen der Erfindung ist es jedoch auch möglich, dass die beiden Bauteile miteinander thermisch gefügt werden. Auch sind formschlüssige Koppelungsverfahren wie Nieten, insbesondere Stanznieten oder aber ein Clinchvorgang möglich.

Das Kühlwerkzeug kann dabei im Rahmen der Erfindung ein plattes Kühlwerkzeug sein, das durch Anlagenkontakt eine Kühlung herbeiführt. Im Rahmen der Erfindung ist es jedoch auch möglich, dass das Kühlwerkzeug beispielsweise als Tauchbad ausgebildet ist, so dass die gesamte temperierte Platine und/oder das temperiert hergestellt und umgeformte Kraftfahrzeugbauteil in das Tauchbad eingetaucht werden und hierbei abgekühlt wird.

Im Rahmen der Erfindung werden jedoch bei allen Ausführungsvarianten grundsätzlich immer die gesamte Platine und/oder das gesamte Kraftfahrzeugbauteil vollständig abgekühlt. Weiterhin kann das Abkühlen in einem ersten und zweiten Kühlvorgang durchgeführt werden. Hierbei wird in dem ersten Kühlvorgang auf eine Temperatur zwischen 120°C und 200°C abgekühlt und in dem zweiten Kühlvorgang auf im Wesentlichen Raumtemperatur abgekühlt. Die beiden Kühlvorgänge können dabei in einem Kühlwerkzeug aber auch in zwei voneinander separaten Kühlwerkzeugen durchgeführt werden. Insbesondere wird ein kombiniertes Umform- und Kühlwerkzeug verwendet. Wird der erste Kühlvorgang in dem Umform- und Kühlwerkzeug durchgeführt, so wird der zweite Kühlvorgang dann besonderes bevorzugt in einem davon separaten zweiten Kühlwerkzeug durchgeführt.

Im Rahmen der Erfindung werden die Platine oder das Bauteil weiterhin besonders bevorzugt oberflächenbehandelt. Hierunter ist insbesondere eine Beschichtung, ganz besonders bevorzugt eine Konversionsbeschichtung zu verstehen. Die Oberflächenbehandlung der Platine oder des Bauteils wirkt sich insbesondere vorteilhaft auf die Weiterverarbeitung mit Hinblick auf ein Fügen aus. Aufgrund der Oberflächenbehandlung besitzen die Platine oder das Bauteil, im Gegensatz zur sich unter Umgebungseinfluss selbsttätig bildenden inhomogenen und verunreinigten Oxidschicht, definierte, reproduzierbare Oberflächeneigenschaften. Dies wirkt sich insbesondere positiv auf alle nachfolgenden Fertigungsverfahren aus, welche eine Bindung mit dieser Oberfläche herstellen, wie z.B. Kleben, Lackieren oder zur Stabilisierung des Verfahrens möglichst reproduzierbare Eingangseigenschaften benötigen, wie z.B. Lichtbogenschweißen.

Im Rahmen der Erfindung wird zur Durchführung des Verfahrens insbesondere ein Werkzeug eingesetzt, das verschiedene Abschnitte aufweist, wobei die Abschnitte in dem Werkzeug voneinander verschiedene Temperaturen in Bezug auf ein Erwärmen oder aber Kühlen einnehmen können und diese Abschnitte mit der Platine unter erhöhter Flächenpressung in Kontakt gebracht werden. Hierdurch sind dann die verschiedenen Temperaturgefälle an der Platine in den dort verschieden zu temperierenden Bereichen realisierbar. Die verschiedenen Abschnitte in dem Umform- bzw. Temperierwerkzeug können beispielsweise durch voneinander unabhängige Temperiersegmente, die insbesondere gegeneinander isoliert sind, ermöglicht werden.

Weitere Vorteile, Merkmale, Eigenschaften und Aspekte der vorliegenden Erfindung werden in der nachfolgenden Beschreibung erläutert sowie in den schematischen Figuren dargestellt. Diese dienen dem einfachen Verständnis der Erfindung. Es zeigen:
- Figur 1a und b: eine Seitenansicht sowie eine Querschnittsansicht einer erfindungsgemäß hergestellten Kraftfahrzeug B-Säule,
- Figur 2a und b: ein Außenverstärkungsblech für eine Kraftfahrzeug B-Säule gemäß Figur 1 und
- Figur 3a bis c: ein Innenverstärkungsblech.

In den Figuren werden für gleiche oder ähnliche Bauteile dieselben Bezugszeichen verwendet, auch wenn eine wiederholte Beschreibung aus Vereinfachungsgründen entfällt.

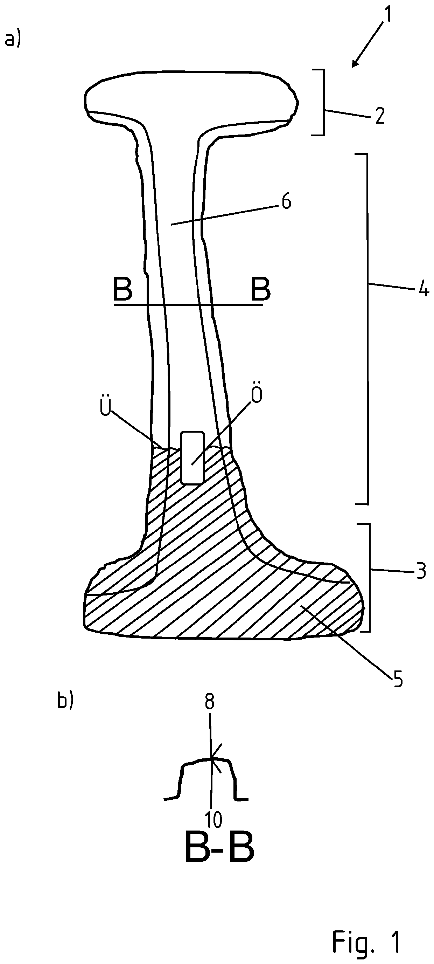

Figur 1a zeigt ein erfindungsgemäßes Kraftfahrzeugbauteil 1 in Form einer B-Säule in Seitenansicht. Die B-Säule weist einen Kopfbereich 2 zur Anbindung an einen nicht näher dargestellten Dachholm sowie einen Fußbereich 3 zur Anbindung an einen nicht näher dargestellten Seitenschweller auf. Zwischen dem Kopfbereich 2 und dem Fußbereich 3 erstreckt sich ein Mittelabschnitt 4 mit einer Öffnung Ö. Erfindungsgemäß ist nunmehr der Fußbereich 3 sowie ein unterer Teil des Mittelabschnittes 4 ausgebildet als erster Bereich 5, der während des Umformens auf der Umformtemperatur gehalten wird, so dass hier ein weicheres bzw. duktileres Gefüge mit bevorzugt zwischen 120 und 250 MPa eingestellt ist. Der obere Mittelabschnitt 4 sowie der Kopfbereich 2 sind hier als zweiter Bereich 6 ausgebildet, der gegenüber dem ersten Bereich 5 härtere Eigenschaften aufweist und eine Dehngrenze zwischen 250 MPa und 450 MPa besitzt. Getrennt sind erster Bereich 5 und zweiter Bereich 6 durch einen Übergang Ü, der sich über 1 mm bis 100 mm, vorzugsweise 15 mm bis 50 mm erstreckt. In Figur 1b ist ein Querschnitt gemäß der Schnittlinie B-B dargestellt, so dass zu erkennen ist, dass während des Umformverfahrens zumindest der Mittelabschnitt 4 in Form eines Hutprofils im Querschnitt ausgebildet wurde. Somit ist das Bauteil dreidimensional geformt worden.

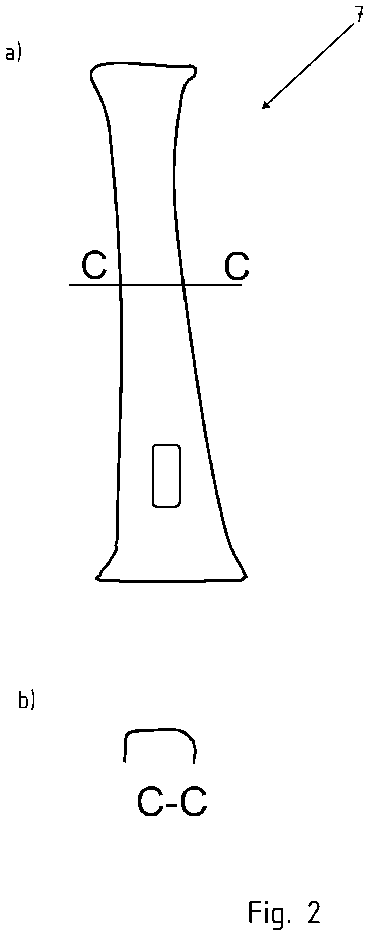

Ferner dargestellt sind in Figur 2a und b ein Außenverstärkungsblech 7 in Seitenansicht sowie in Querschnittsansicht. Das Außenverstärkungsblech 7 weist einen im Wesentlichen homogenen Querschnittsverlauf auf und ist gemäß Figur 2b als U-förmiges Verstärkungsblech ausgebildet. Dieses wird auf die Außenseite 8 gemäß Figur 1b des Kraftfahrzeugbauteils 1 aufgebracht, insbesondere durch Verkleben, besonders bevorzugt mit thermisch aktivierbarem Kleber.

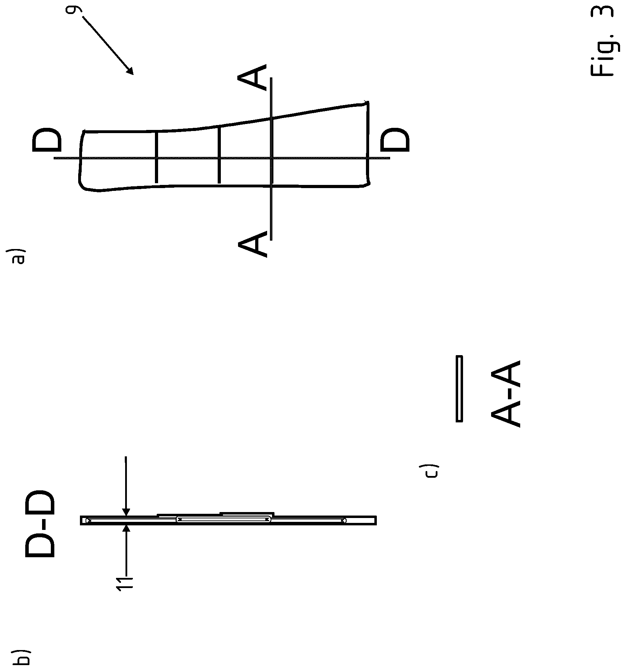

In Figur 3a bis c ist ferner ein Innenverstärkungsblech 9 dargestellt, dass in Figur 3a als Seitenansicht, Figur 3b als Längsschnitt und Figur 3c als Querschnitt dargestellt ist. Das Innenverstärkungsblech 9 wird auf einer Innenseite gemäß Figur 1b der B-Säule angebracht. Das Innenverstärkungsblech 9 weist gemäß Längsschnittlinie D-D partiell voneinander verschiedene Wandstärken 11 im Längsverlauf auf. Der Querschnittsverlauf ist dargestellt in Figur 3c gemäß Schnittlinie A-A, wobei dieser homogen und flach ausgebildet ist. Das Innenverstärkungsblech 9 wird an der Innenseite 10 gemäß Figur 1b aufgebracht, bevorzugt durch Verkleben.

Das Innenverstärkungsblech wird bevorzugt hergestellt aus einer zu einem Profil stranggepressten Aluminiumlegierung, wobei unterschiedliche Wandstärken im Profil eingestellt werden und in einem nachfolgenden Prozessschritt das Profil längs beschnitten, optional flach abgewickelt und/oder auf seine Endform pressgeformt wird.

### Bezugszeichen:

- 1 -: Kraftfahrzeugbauteil
- 2 -: Kopfbereich
- 3 -: Fußbereich
- 4 -: Mittelabschnitt
- 5 -: erster Bereich
- 6 -: zweiter Bereich
- 7 -: Außenverstärkungsblech
- 8 -: Außenseite zu 1
- 9 -: Innenverstärkungsblech
- 10 -: Innenseite zu 1
- 11 -: Wandstärke

- Ö -: Öffnung
- Ü -: Übergang

## Patentansprüche

1. Verfahren zur Herstellung eines Kraftfahrzeugbauteils (1), **gekennzeichnet, durch** folgende Verfahrensschritte:
- Bereitstellen einer kaltverfestigten Platine aus einer 5000er Aluminiumlegierung,
- Partielles Erwärmen der Platine in einem ersten Bereich (5) auf eine Temperatur größer 350°C und in einem zweiten Bereich (6) auf eine Temperatur zwischen 150°C und 350°C in weniger als 20 s, ,
- Transfer in ein Umformwerkzeug und Abkühlen während und/oder nach der Umformung in weniger als 20 s auf eine Temperatur von 5°C bis 40°C,
- Einstellen einer Dehngrenze in dem ersten Bereich (5) kleiner 250 MPa und größer 120 MPa und in dem zweiten Bereich (6) kleiner 450 MPa und größer 200 MPa, wobei die Dehngrenze des zweiten Bereichs (6) kleiner als die Ausgangsdehngrenze der Platine und zugleich zumindest mehr als 50 MPa größer als die Dehngrenze im ersten Bereich (5) ist.

2. Verfahren nach Anspruch 1, **dadurch gekennzeichnet, dass** das Umformen und Abkühlen in einem kombinierten Umform- und Kühlwerkzeug in weniger als 20s durchgeführt wird.

3. Verfahren nach Anspruch 1, **dadurch gekennzeichnet, dass** die partiell erwärmte Platine in ein Umformwerkzeug transferiert und in weniger als 20 s schnellumgeformt wird und nach Abschluss des Umformvorganges in das Kühlwerkzeug transferiert und abgekühlt wird.

4. Verfahren nach einem der Ansprüche 1 bis 3, **dadurch gekennzeichnet, dass** die Platine vor oder das Kraftfahrzeugbauteil (1) während oder nach der Umformung beschnitten wird.

5. Verfahren nach einem der Ansprüche 1 bis 4, **dadurch gekennzeichnet, dass** eine Platine mit mindestens zwei voneinander verschiedenen Wandstärken (11) umgeformt wird.

6. Verfahren nach einem der Ansprüche 1 bis 5, **dadurch gekennzeichnet, dass** das Abkühlen in einem ersten und einem zweiten Kühlvorgang durchgeführt wird, wobei in dem ersten Kühlvorgang auf eine Temperatur zwischen 120°C und 200°C abgekühlt wird und der erste Kühlvorgang in weniger als 10 s durchgeführt wird und in dem zweiten Kühlvorgang auf Raumtemperatur abgekühlt wird, wobei der zweite Kühlvorgang in weniger als 10 s durchgeführt wird.

7. Verfahren nach Anspruch 6, **dadurch gekennzeichnet, dass** der zweite Kühlvorgang in einem separaten Kühlwerkzeug durchgeführt wird.

8. Verfahren nach einem der Ansprüche 1 bis 7, **dadurch gekennzeichnet, dass** die Platine oberflächenbehandelt ist.

9. Verfahren nach Anspruch 8, **dadurch gekennzeichnet, dass** die Platine beschichtet ist.

10. Verfahren zur Herstellung einer Kraftfahrzeugsäule, **dadurch gekennzeichnet, dass** ein Kraftfahrzeugbauteil (1), hergestellt mindestens nach Anspruch 1, mit einem Innenverstärkungsblech (9) und/oder einem Außenverstärkungsblech (7) gekoppelt wird.

11. Verfahren nach Anspruch 10, **dadurch gekennzeichnet, dass** das Kraftfahrzeugbauteil (1) nach dem Umformen mit dem Innenverstärkungsblech (9) und/oder dem Außenverstärkungsblech (7) verklebt wird.

12. Verfahren nach Anspruch 10, **dadurch gekennzeichnet, dass** ein thermisch aktivierbarer Kleber für die Kopplung des Kraftfahrzeugbauteils (1) mit dem Innenverstärkungsblech (9) und/oder dem Außenverstärkungsblech (7) genutzt wird.

## Claims

1. Method for manufacturing a vehicle component (1), **characterised by** the following method steps:
- Providing a strain-hardened board made from a 5000 aluminium alloy,
- Partial heating of the board in a first range (5) to a temperature greater than 350°C and in a second range (6) to a temperature between 150°C and 350°C, in less than 20s,
- Transfer to a reshaping mould and cooling during and/or after the reshaping in less than 20s to a temperature of 5°C to 40°C,
- Setting a yield strength in a first range (5) of less than 250MPa and greater than 120MPa and in a second range (6) of less than 450MPa and greater than 200MPa, wherein the yield strength of the second area (6) is less than the starting yield limit of the board and, at the same time, is at least 50MPa greater than the yield strength in the first area (5).

2. Method according to claim 1, **characterised in that** the reshaping and cooling is carried out in a combined reshaping and cooling mould in less than 20s.

3. Method according to claim 1, **characterised in that** the partially heated board is transferred to a reshaping mould and quickly reshaped in less than 20s and after culmination of the reshaping procedure is transferred into the cooling mould and cooled.

4. Method according to any of claims 1 to 3, **characterised in that** the board is cut before the reshaping or the vehicle component (1) is cut during or after the reshaping.

5. Method according to any of claims 1 to 4, **characterised in that** a board is reshaped with at least two wall thicknesses (11) different from one another.

6. Method according to any of claims 1 to 5, **characterised in that** the cooling is done in a first and a second cooling procedure, whereby it is cooled to a temperature of between 120°C and 200°C in the first cooling procedure and the first cooling procedure is done in less than 10s and cooling is to room temperature in the second cooling procedure, with the second cooling procedure being done in less than 10s.

7. Method according to claim 6, **characterised in that** the second cooling procedure is carried out in a separate cooling mould.

8. Method according to any of claims 1 to 7, **characterised in that** the board is surface-treated.

9. Method according to claim 8, **characterised in that** the board is coated.

10. Method for manufacturing a vehicle column, **characterised in that** a vehicle component (1), manufactured at least according to claim 1, is coupled with an internal reinforcement sheet (9) and/or an external reinforcement sheet (7).

11. Method according to claim 10, **characterised in that** the vehicle component (1) is after the reshaping adhesively bonded with the internal reinforcement sheet (9) and/or the external reinforcement sheet (7).

12. Method according to claim 10, **characterised in that** a thermally-activated adhesive is used for the coupling of the vehicle component (1) with the internal reinforcement sheet (9) and/or the external reinforcement sheet (7).

## Revendications

1. Procédé de fabrication d'une pièce de véhicule automobile (1), **caractérisé par** les étapes de procédé suivantes :
- fourniture d'une plaque écrouie à froid à partir d'un alliage d'aluminium de la série 5000,
- chauffage partiel de la plaque dans une première zone (5) à une température supérieure à 350 °C et dans une deuxième zone (6) à une température comprise entre 150 °C et 350 °C, en moins de 20 secondes,
- transfert dans un outil de formage postérieur et refroidissement pendant et/ou après le formage postérieur en moins de 20 s à une température de 5 °C à 40 °C,
- réglage d'une limite d'allongement dans la première zone (5) inférieure à 250 MPa et supérieure à 120 MPa et dans la deuxième zone (6) inférieure à 450 MPa et supérieure à 200 MPa, dans lequel la limite d'allongement de la deuxième zone (6) est inférieure à la limite d'allongement de départ de la plaque et en même temps supérieure d'au moins 50 MPa à la limite d'allongement dans la première zone (5).

2. Procédé selon la revendication 1, **caractérisé en ce qu'**on effectue le formage postérieur et le refroidissement dans un outil de formage postérieur et de refroidissement combiné en moins de 20 s.

3. Procédé selon la revendication 1, **caractérisé en ce que** la plaque partiellement réchauffée est transférée dans un outil de formage postérieur et est formée postérieurement rapidement en moins de 20 s et à la fin du processus de formage postérieur est transférée et refroidie dans l'outil de refroidissement.

4. Procédé selon l'une quelconque des revendications 1 à 3, **caractérisé en ce qu'**on découpe la plaque avant le formage postérieur ou on découpe la pièce de véhicule automobile (1) pendant ou après le formage postérieur.

5. Procédé selon l'une quelconque des revendications 1 à 4, **caractérisé en ce qu'**on forme une plaque avec au moins deux épaisseurs (11) différentes l'une de l'autre.

6. Procédé selon l'une quelconque des revendications 1 à 5, **caractérisé en ce qu'**on effectue le refroidissement dans une première opération de refroidissement et dans une deuxième opération de refroidissement, le refroidissement s'effectuant dans la première opération de refroidissement à une température comprise entre 120 et 200 °C et la première opération de refroidissement s'effectuant en moins de 10 s, le refroidissement s'effectuant dans la deuxième opération de refroidissement à la température ambiante, dans lequel la deuxième opération de refroidissement s'effectuant en moins de 10 secondes.

7. Procédé selon la revendication 6, **caractérisé en ce que** la deuxième opération de refroidissement s'effectue dans un outil de refroidissement séparé.

8. Procédé selon l'une quelconque des revendications 1 à 7, **caractérisé en ce que** la plaque subit un traitement de surface.

9. Procédé selon la revendication 8, **caractérisé en ce que** la plaque reçoit un revêtement.

10. Procédé de fabrication d'un montant de véhicule automobile, **caractérisé en ce qu'**une pièce de véhicule automobile (1), fabriquée au moins selon la revendication 1, est couplée avec une tôle de renfort intérieure (9) et/ou une tôle de renfort extérieure (7).

11. Procédé selon la revendication 10, **caractérisé en ce qu'**on colle la tôle de renfort intérieure (9) et/ou la tôle de renfort extérieure (7) à la pièce de véhicule automobile (1) après le formage postérieur.

12. Procédé selon la revendication 10, **caractérisé en ce qu'**on utilise une colle activable thermiquement pour le couplage de la pièce de véhicule automobile (1) avec la tôle de renfort intérieure (9) et/ou la tôle de renfort extérieure (7).
